(19) **Europäisches Patentamt / European Patent Office / Office européen des brevets**

(11) **EP 1 857 257 B1**

(12) **FASCICULE DE BREVET EUROPEEN**

(45) Date de publication et mention de la délivrance du brevet:
**02.10.2019 Bulletin 2019/40**

(51) Int Cl.:
***B29C 65/34*** *(2006.01)*     ***H05B 3/34*** *(2006.01)*

(21) Numéro de dépôt: **07290549.0**

(22) Date de dépôt: **30.04.2007**

(54) **DISPOSITIF ET PROCÉDÉ POUR LE SOUDAGE DE DEUX PIÈCES EN POLYMÈRE PAR FUSION**

VORRICHTUNG UND VERFAHREN ZUM SCHWEISSEN VON ZWEI KUNSTSTOFFTEILEN MITTELS VERSCHMELZUNG

DEVICE AND METHOD OF FUSION WELDING TWO POLYMER PARTS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **17.05.2006 FR 0651790**

(43) Date de publication de la demande:
**21.11.2007 Bulletin 2007/47**

(73) Titulaire: **ENGIE**
**92400 Courbevoie (FR)**

(72) Inventeurs:
• **Darut, Alain**
**78400 Chatou (FR)**
• **Gueugnaut, Dominique**
**75005 Paris (FR)**
• **Lopitaux, Aymeric**
**75017 Paris (FR)**

(74) Mandataire: **Thinat, Michel**
**Cabinet Weinstein**
**176 avenue Charles de Gaulle**
**92200 Neuilly sur Seine (FR)**

(56) Documents cités:
EP-A2- 0 430 762     FR-A- 1 473 009
JP-A- 5 138 742

## Description

La présente invention concerne un dispositif pour le soudage de deux pièces en polymère par fusion obtenue moyennant une nappe chauffante ainsi qu'un procédé de soudage de deux pièces en polymère par fusion obtenu moyennant une nappe chauffante.

L'invention concerne donc le domaine de la mise en place d'un réseau de distribution d'un fluide et celui du remplacement d'un tronçon ou de plusieurs tronçons d'une canalisation ou d'un conduit en matière thermofusible d'un tel réseau.

Les réseaux de distribution, notamment en ce qui concerne la distribution de gaz de ville ou de gaz naturel, sont actuellement déjà, et le seront de plus en plus, constitués en grande majorité de conduits formés à partir de tubes ou tuyaux en polyéthylène ou en polyamide, polybutylène, polypropylène ou polychlorure de vinyle. Pour assembler de tels tuyaux, plusieurs techniques existent. Une par exemple consiste à chauffer les embouts de deux tuyaux disposés en regard jusqu'à ce que la matière thermofusible soit suffisamment fluide pour que les deux embouts, rapprochés l'un à l'autre sous une légère pression, se fondent l'un dans l'autre et forment une jonction sensiblement étanche au gaz et avec une résistance mécanique compatible avec l'utilisation des conduits à former.

Selon une autre technique, on utilise une nappe chauffante réalisée à partir d'un fil résistif revêtu d'un vernis isolant. La nappe chauffante réalisée sous une forme rectangulaire ou sous la forme d'une gaine est alors conformée pour être alimentée électriquement par un automate réglable en tension ou en intensité de courant et résistant aux courts-circuits.

Une nappe chauffante pour le soudage d'éléments en matière plastique est connue du document EP-A-0 430 762. Selon ce document, l'élément chauffant est une pièce de raccordement équipée d'une résistance électrique qui se présente sous la forme d'un fil unique enrobé d'une couche isolante électriquement et présentant des points de croisement. La couche d'enrobage fond à une température comprise entre la température de fusion des pièces à réunir et leur température de dégradation thermique pour que des courts-circuits soient générés sur les fils, et que l'arrêt de l'alimentation en courant de ce dernier soit commandé.

La technique de soudage au moyen d'un filet chauffant ou d'une nappe chauffante paraît être assez prometteuse, et cela aussi bien en ce qui concerne le déroulement de l'assemblage que la bonne tenue dans le temps de la jonction ainsi réalisée.

Le soudage de deux pièces en polymère par fusion obtenue moyennant une nappe chauffante repose sur un chauffage modéré et local de la zone à mettre en fusion d'un conduit en matière thermofusible, par exemple en polyéthylène, au moyen d'un élément chauffant électrique formant une résistance de chauffe. Ce soudage est effectué sans aucun apport de matière de rechargement. L'alimentation des conducteurs de la nappe chauffante avec une énergie électrique appropriée est assurée avantageusement, mais non exclusivement par un automate, par exemple un automate de soudage habituellement utilisé pour le soudage par électrofusion.

La mise en place d'une nappe chauffante ou d'un filet chauffant, lorsque l'on ne recourt pas à la présente invention, se fait essentiellement en quatre étapes, à savoir :

- injection d'une empreinte ou préforme en polyéthylène ou en un autre polymère thermofusible en une faible épaisseur, généralement de l'ordre de 0,3 mm à 0,8 mm, l'empreinte étant destinée à recevoir un fil résistif ;
- insertion et maintien du fil résistif dans l'empreinte par bobinage ;
- mise en place de connecteurs à chaque extrémité du fil bobiné ; et
- surmoulage du corps de raccord sur l'implant chauffant constitué au terme de l'étape précédente.

La réalisation de l'implant sous cette forme constitue la phase la plus délicate et la plus coûteuse compte tenu de différents facteurs pouvant perturber le procédé. De tels facteurs sont par exemple une rupture du fil au cours du bobinage, une liaison imparfaite des connecteurs au fil et la présence d'un différentiel de contraintes résiduelles plus ou moins important entre l'empreinte et le corps du raccord.

De plus, l'expérience a montré que la réalisation de l'implant souffre de nombreux problèmes de préparation des tubes à souder, ces problèmes étant liés principalement au grattage imparfait des surfaces à assembler.

C'est ainsi que la technique de thermofusion par une nappe chauffante supprime le bobinage classique des raccords et amène à l'interface des caractéristiques thermiques supérieures à celles des systèmes à bobinage. Par ailleurs, la fusion par nappe chauffante permet de s'appliquer dans les cas où des pièces polymères de géométries diverses et complexes sont à souder ensemble, ce qui ne serait pas forcément possible avec le système de bobinage.

Toutefois, aussi prometteur et avantageux que le soudage par fusion obtenu par une nappe chauffante puisse paraître, il n'en reste pas moins que certaines difficultés inhérentes à l'état des pièces à souder au moment du soudage n'ont pu être réglées. Ces difficultés sont principalement dues à une préparation imparfaite (grattage, nettoyage, dégraissage, ...) des pièces à souder, mais aussi à un état de dégradation plus ou moins avancé (oxydation, carbonisation,...) ou encore à des défauts d'ordre géométrique ou de rugosité importante.

D'autres problèmes résultent d'une souplesse parfois insuffisante de la nappe pour une géométrie donnée des pièces, d'une fixation parfois difficile de la nappe sur la pièce à souder et de difficultés avec le maintien de la nappe dans la position déterminée jusqu'à la fusion des pièces à souder.

Un autre problème encore est que, dans certains cas, il serait souhaitable de pouvoir varier l'apport d'énergie de fusion d'un endroit à l'autre sur les pièces à souder. Théoriquement il serait peut-être possible d'utiliser plusieurs nappes chauffantes, chacune avec sa propre alimentation réglée selon les besoins locaux de chacune des nappes. Toutefois, une telle approche semble bien compliquée à réaliser sur un chantier, c'est-à-dire hors d'un laboratoire.

Le but de l'invention est de proposer des moyens permettant de remédier aux inconvénients énoncés ci avant.

Le but de l'invention est atteint en premier par un dispositif pour le soudage de deux pièces en polymères par fusion obtenue moyennant une nappe chauffante tricotée à partir d'un fil résistif revêtu d'un vernis isolant, la nappe chauffante étant conformée pour être alimentée électriquement par un automate réglable en tension ou en intensité de courant et résistant aux courts-circuits.

Conformément à l'invention, la nappe chauffante est obtenue à partir d'un fil résistif ayant un diamètre allant de 0,2 mm à 0,3 mm, et présente des mailles approximativement parallélépipédiques dont les dimensions vont de 1,5 x 3 mm$^2$ à 2,5 x 4,5 mm$^2$.

Grâce aux dispositions de l'invention, il est possible d'utiliser une nappe chauffante qui est électriquement suffisamment forte pour générer des niveaux d'énergie de l'ordre de 10 à 100 joules par mm$^2$ pour les matériaux habituels thermofusibles, et qui est en même temps suffisamment souple sur les plans mécanique et géométrique pour pouvoir s'adapter à diverses géométries des pièces à souder et, comme il sera explicité plus loin, de varier l'apport d'énergie thermique d'un endroit à l'autre des pièces à souder, et cela avec une seule nappe chauffante et une seule alimentation électrique.

Par ailleurs, selon une caractéristique supplémentaire de l'invention, la fixation d'une nappe chauffante sur une pièce à souder moyennant des plots en un matériau thermofusible permet un positionnement temporaire adéquat tant pour la manipulation sur chantier que pour la fabrication en usine. Plus particulièrement en usine, cette possibilité de fixation évite de devoir recourir à des moyens particuliers pour le maintien en place de la nappe chauffante et apporte donc la disparition de la robotisation de précision associée pour la mise en place de la nappe. Un autre avantage de ce mode de fixation est qu'il apporte une grande souplesse pour le positionnement de la nappe, par exemple en fixant toutes les mailles ou seulement une certaine partie des mailles, ainsi qu'une adaptation des plots au matériau des pièces à souder lorsque les pièces sont de même nature ou lorsqu'il s'agit d'un assemblage hétérogène où l'on fixe la nappe sur le matériau le plus fluide.

Le but de l'invention est par ailleurs atteint avec un procédé de soudage de deux pièces en polymères par fusion obtenue moyennant une nappe chauffante tricotée à partir d'un fil résistif revêtu d'un vernis isolant, la nappe chauffante étant conformée pour être alimentée électriquement par un automate réglable en tension ou en intensité de courant et résistant aux courts-circuits, étant obtenue à partir d'un fil résistif ayant un diamètre allant de 0,2 mm à 0,3 mm, et présentant des mailles approximativement parallélépipédiques dont les dimensions vont de 1,5 x 3 mm$^2$ à 2,5 x 4,5 mm$^2$, le procédé comprenant au moins les étapes suivantes :

- donner à une nappe chauffante une forme se rapprochant le plus possible de celle d'au moins une des faces à fusionner des pièces à souder,
- fixer la nappe chauffante sur cette face,
- assembler les deux pièces à souder,
- effectuer le soudage.

Selon un mode de mise en oeuvre de ce procédé, la nappe chauffante peut être fixée sur une des pièces à souder à l'aide de plots réalisés en un matériau thermofusible.

Comme évoqué en partie déjà plus haut, la présente invention repose sur la mise en oeuvre, à l'interface de deux ou plusieurs pièces polymères à souder, d'une nappe chauffante dans le but d'assurer le soudage par électrofusion de ces pièces. Ces pièces peuvent être réalisées en la même matière, par exemple en polyéthylène, mais elles peuvent aussi être réalisées en des matières différentes, par exemple en polyéthylène et en polypropylène.

Pour faciliter la lecture de la description de l'invention, il sera fait référence uniquement à un assemblage de deux pièces. Toutefois, il va sans dire que la présente invention s'applique aussi à un assemblage de trois ou davantage de pièces, par exemple lorsqu'un piquage d'un conduit par deux autres conduits doit être réalisé et lorsque ces deux conduits de piquage ne peuvent pas être assemblés auparavant.

La nappe chauffante, qui pourrait être réalisée de différentes manières, est, pour les besoins spécifiques de l'invention, réalisée par tricotage à partir d'un fil résistif revêtu d'un vernis isolant dont le point de fusion doit être inférieur à la température de dégradation des pièces polymères à souder. Le revêtement du fil apporte une fonction d'autorégulation de la durée du chauffage des pièces à souder dans le sens que, lorsqu'une température prédéterminée de la jonction soudée à réaliser est atteinte, température qui assure une interpénétration des chaînes de molécules des faces de contact des pièces à assembler, le vernis d'isolation du fil tricoté fond et entraîne un court-circuit avec arrêt du chauffage de la nappe chauffante.

Par ailleurs, la nappe chauffante peut être modelée sous différentes formes, par exemple suivant un plan, sous la forme d'un cylindre ou d'une collerette, et peut ainsi être adaptée aisément à des géométries d'assemblage complexe et, le cas échéant, pour concentrer l'énergie apporté dans des zones ou en des points particuliers des pièces, par exemple un angle, une cavité ou une surépaisseur.

La nappe chauffante peut être mise en forme sous différentes géométries afin de l'adapter au type de pièce à souder. En fonction de la manière dont on souhaite gérer l'énergie apportée à l'interface de soudage, la maille du tricot de la nappe chauffante peut prendre différentes dimensions. De plus, pour une taille de maille donnée, la nappe chauffante peut avantageusement être constituée d'une ou de plusieurs couches. Cet avantage peut également être utilisé pour réaliser un chauffage différencié de différentes zones thermiques des pièces à souder.

Pour fixer la nappe chauffante et pour la maintenir en place, la nappe peut être fixée à l'aide de plots de soudure en polymère fondu. Selon une version alternative, et notamment de manière à améliorer le contact entre les pièces à souder, la nappe chauffante peut avantageusement être intégrée dans l'une des pièces à souder au préalable au cycle de soudage. Cette intégration peut être réalisée par le biais d'un pré-chauffage de la nappe sous chargement extérieur adapté.

Ainsi, l'invention permet d'assurer à la fois un meilleur niveau d'énergie par unité de surface, une meilleure homogénéité de cette énergie à l'interface de soudage ainsi qu'un meilleur contrôle de la température en fonction du temps et par voie de conséquence, d'améliorer la qualité de la soudure, y compris en présence de matières résiduelles à une interface improprement préparée (grattage imparfait ou absence de nettoyage, ...) voire une interface dégradée par oxydation, pyrolyse ou carbonisation.

Le fonctionnement de l'invention repose sur le chauffage localisé contrôlé d'au moins une interface de deux pièces en polymère, par exemple en polyéthylène pendant un temps donné, de manière à provoquer le soudage de celles-ci au terme du cycle de chauffage-refroidissement imposé par un automate du type machine à souder.

Dans le cas de pièces en polyéthylène, le soudage résulte d'une interpénétration moléculaire à l'interface des produits mis en contact sous l'effet de la température et du temps, imposés par la nappe chauffante.

Par rapport à la technique classique filamentaire, ou de bobinage, et même par rapport à la technique d'une nappe chauffante formée par une disposition en croisée d'un fil conducteur, la présente invention permet, par une meilleure gestion et une meilleure répartition de l'énergie apporté à la matière, de favoriser l'interdiffusion des macromolécules au sein de chaque microcellule approximativement délimitée par chacune des mailles de la nappe chauffante, et d'augmenter ainsi localement les possibilités d'interpénétration des matières à souder en activant une proportion plus importante de molécules diffusantes. Ainsi, le procédé de l'invention est particulièrement avantageux en présence d'états de surface imparfaits, causés, par exemple, par des cratères, une forte rugosité, des vagues, etc. ou par des matières partiellement dégradées, voire polluées.

Dans ce cas, la barrière à l'interdiffusion constituée par les molécules dégradées peut être surmontée par le matériau sain environnant plus en profondeur sans avoir à augmenter de manière significative le temps de soudage, comme il serait nécessaire dans le cas d'un soudage classique avec un enroulement filamentaire. En outre, le chauffage de l'interface est assuré par une nappe de résistivité donnée s'échauffant par effet joule lorsque la nappe est alimentée électriquement par une machine ou un automate adapté. Les cycles de chauffage et de refroidissement imposés à l'assemblage par l'automate peuvent être réalisés avantageusement avec des paramètres électriques tels qu'ils permettent d'utiliser l'ensemble des automates de soudage disponibles sur le marché.

Les paramètres de soudage optimaux peuvent être déterminés par approches successives au moyen d'un essai de résistance mécanique indépendant, par exemple par un essai du type pelage. Pour une qualité de soudage optimale, même en présence de matières initialement dégradées, l'énergie délivrée à l'interface doit être comprise avantageusement entre environ 10 joules par mm$^2$ et environ 100 joules par mm$^2$, en particulier pour le polyéthylène

Dans l'exemple d'un mode de soudage à tension imposée, le temps de chauffage de la nappe sera donc adapté en fonction de la résistance de celle-ci de manière à rester dans cette fenêtre d'énergie.

En deçà de la valeur inférieure d'énergie par unité de surface, la qualité de la soudure n'est pas optimale, conséquence d'une interdiffusion et d'une interpénétration incomplètes des molécules au niveau de l'interface. Au-delà de la valeur supérieure d'énergie, la qualité de la soudure a tendance à diminuer lorsque la cinétique de dégradation de la matière prend le pas sur la cinétique d'interdiffusion macromoléculaire.

La disposition d'un filet chauffant ou d'une nappe chauffante au voisinage du plan de soudage permet d'apporter une énergie électrique par unité de surface plus importante et plus homogène en comparaison de la technique classique, par exemple par enroulement filamentaire en forme de bobine ou de nappe. L'énergie par unité de surface plus importante et mieux répartie permet d'améliorer l'interdiffusion des macromolécules à l'interface et d'améliorer ainsi la qualité de soudage y compris dans le cas d'états de surface imparfaits (par forte rugosité, vagues, cratères, etc.) et/ou de matières partiellement dégradées par oxydation, carbonisation, etc.

A titre indicatif, suivant des essais réalisés en laboratoire, avec un tricot à petites mailles et un tricot à grosses mailles, avec les dimensions suivantes :

|  | Tricot PM (petites mailles) | Tricot GM (grosses mailles) |
|---|---|---|
| Diamètre du fil, 2r | 0.22 mm | 0.28 mm |
| Petit côté de la «cellule», a | 1.5 mm | 3 mm |
| Grand côté de la «cellule», b | 2.5 mm | 4.5 mm |
| Surface de la «cellule», a.b | 3.75 mm$^2$ | 13.5 mm$^2$ |

et pour les conduits en polyéthylène ayant une masse volumique à l'état solide de 960 kg/m$^3$, une enthalpie de fusion de 180 à 200 joules/gramme et un domaine de fusion entre 120 et 140 °C, la gamme d'énergie suivante nécessaire pour la fusion des pièces à souder, c'est-à-dire l'énergie par unité de surface à apporter pour obtenir des conditions de bon soudage en laboratoire (matériau non vieilli et matériau vieilli) a été déterminée : entre 10 J/mm$^2$ et 100 J/mm$^2$.

L'énergie nécessaire à la fusion de 1 mm$^3$ de matière est de l'ordre de 190 (J/g) x 10$^{-6}$ (g/mm$^3$) soit environ 0,2 J/mm$^3$.

Dans le cas des essais de laboratoire on considère que la profondeur fondue de part et d'autre de l'interface reste inférieure à 1 mm dans les conditions optimales de soudage, soit une profondeur fondue totale de 2 mm (épaisseur totale de l'assemblage des deux éprouvettes égale à environ 4 mm).

D'où un volume fondu par cellule de l'ordre de 2a.b (mm$^3$) auquel il faut apporter au minimum 0,2 (J/mm$^3$). 2a.b (mm$^3$) soit 0,4.a.b (J).

Plus généralement :

$$\mathrm{E_{min} > (enthalpie\ de\ fusion)\ .\ (masse\ volumique)\ .\ (a.b)\ .\ (profondeur\ fondue)} \qquad \mathrm{(condition\ 1),}$$

condition liant l'énergie minimale à apporter pour la mise en fusion de la matière à l'interface sur une profondeur donnée, l'énergie nécessaire à la fusion du matériau d'une masse volumique donnée et la surface de la « cellule chauffante ».

De l'expression de l'énergie : E = (U$^2$ . t) / R (où U est la tension appliquée pendant le temps t et R est la résistance totale du tricot)

et de celle de la résistance : R = (p . l)/S (où p, l et S sont respectivement la résistivité, la longueur et la section du fil),

on tire :

$$\mathrm{E = (U^2\ .\ t).S/(\rho\ .\ l)\ ,}$$

d'où l'énergie par unité de surface :

$$\mathrm{E_s = (U^2\ .\ t).[\pi\ r^2]/(\rho.\ l)\ .\ A\ .\ B}$$

(où A,B est la surface chauffée totale).

Ramenée à la taille de la cellule, l'énergie par unité de surface devient :

$$\mathrm{E_s = (U^2\ .\ t).\ [\pi\ r^2]/(\rho.[2a+2b]).([a+2r].[b+2r]),}$$

d'où:

$$\mathrm{10\ J/mm^2 < (U^2\ t).[\pi r^2]/(\rho.[2a+2b]).([a+2r].[b+2r])<}$$
$$\mathrm{100\ J/m^2} \qquad \mathrm{(condition\ 2),}$$

condition liant la taille de la « cellule chauffante » aux paramètres du fil ainsi qu'aux conditions de fonctionnement.

La présente invention concerne également les caractéristiques ci-après considérées isolément ou selon toute combinaison techniquement possible :

- le fil résistif de la nappe chauffante est recouvert d'un vernis ayant un point de fusion inférieur à la température de dégradation des pièces polymères à souder ;
- le fil résistif de la nappe chauffante est recouvert d'un vernis choisi selon son point de fusion ;
- la nappe chauffante est réalisée sous la forme d'un objet allongé ;
- la nappe chauffante est réalisée sous la forme d'une gaine ;
- la nappe chauffante est réalisée sous la forme d'une bande ;
- la nappe chauffante présente un pas de maille irrégulier ;
- une surconcentration ponctuelle de l'énergie de soudage est obtenue en repliant la nappe sur elle-même autant que de besoin ;
- une surconcentration ponctuelle de l'énergie de soudage est obtenue en donnant à la nappe chauffante un pas de maille irrégulier.

D'autres caractéristiques et avantages de la présente invention ressortiront de la description ci-après d'un mode de réalisation d'une nappe chauffante d'un dispositif de l'invention et son application à deux conduits à souder. Cette description est faite en référence aux dessins dans lesquels :

- la Figure 1 représente une partie d'une nappe chauffante d'un dispositif de l'invention,
- la Figure 2 montre la nappe de la figure 1 en position repliée,
- la Figure 3 représente une variante de la nappe chauffante de la figure 1, et
- la Figure 4 représente un diagramme d'un cycle de soudage avec mesure de la température à l'interface et de la force imposée au cours du soudage.

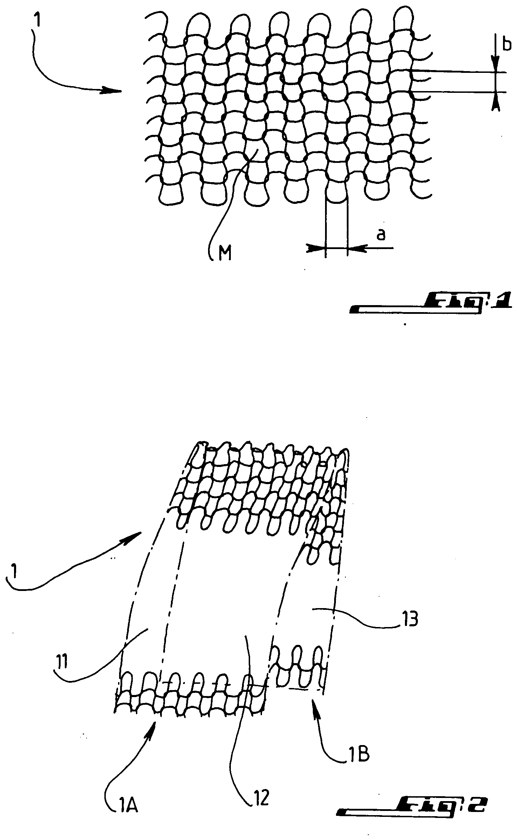

La Figure 1 représente une partie d'une nappe chauffante tricotée 1 utilisée pour le dispositif de l'invention. La nappe 1 est obtenue par tricotage à partir d'un fil résistif ayant un diamètre 2r et qui est recouvert d'un vernis isolant et confectionné de manière à présenter des mailles M approximativement parallélépipédiques avec des dimensions a, b ou a est la référence du petit côté d'une cellule ou maille M, ou b est la référence du grand côté de la maille M et où le produit a.b est la surface d'une maille correspondant approximativement à une cellule chauffante de la nappe chauffante 1. Conformément à l'invention, le petit côté d'une maille M a des dimensions allant de 1,5 à 2,5 mm et le grand côté b a des dimensions allant de 3 à 4,5 mm.

La nappe chauffante 1 est réalisée soit sous la forme d'un corps plat, soit sous la forme d'une gaine. Par ailleurs, le tricotage est effectué de manière à donner à la nappe chauffante finie une certaine flexibilité dimensionnelle dans le sens de la longueur de la nappe et une faible flexibilité dans le sens transversal.

La Figure 2 représente une nappe chauffante 1 réalisée sous la forme d'une gaine et pouvant donc être enfilée sur une pièce cylindrique à souder ou être aplatie et utilisée comme une nappe chauffante en bande. Dans ce dernier cas, la nappe chauffante aura donc deux couches de mailles superposées. Pour ne pas surcharger la figure 2, la nappe 1 est représentée comme une simple bande, c'est-à-dire on ne voit que la couche orientée vers le lecteur des dessins.

La figure 2 représente plus particulièrement une nappe chauffante 1 en forme de gaine, aplatie et repliée une fois pour augmenter localement le nombre de couches de mailles et pour obtenir ainsi une surconcentration ponctuelle de l'énergie de soudage.

En effet, tel que cela est représenté sur la figure 2, la nappe chauffante 1 est repliée une fois et les deux parties 1A, 1B de la nappe ainsi obtenues sont disposées partiellement décalées l'une par rapport à l'autre de manière à obtenir, en ce qui concerne le nombre de couches de mailles et la capacité d'énergie à apporter, une première partie de nappe simple 11, une partie de nappe double 12 et une seconde partie de nappe simple 13. Selon la façon de décaler les deux parties 1A, 1B de la nappe 1, la partie de nappe double 12 est plus ou moins large et plus ou moins longue.

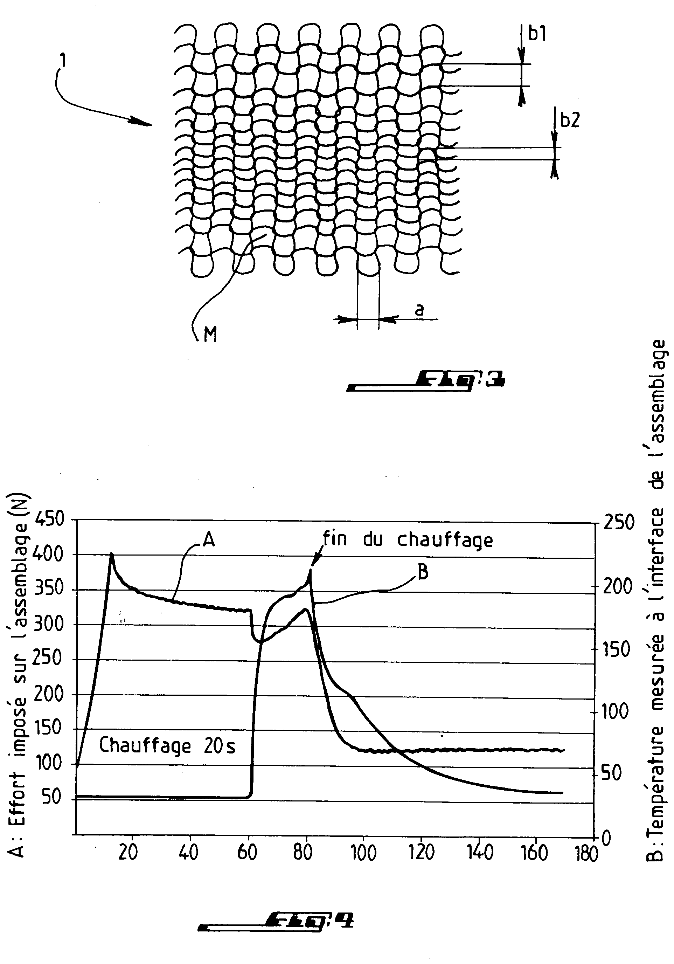

La Figure 3 représente une partie d'une nappe chauffante 1 d'un dispositif de l'invention, avec la différence par rapport à celle de la Figure 1 d'une répartition inhomogène des mailles sur la surface considérée. Cette répartition irrégulière des mailles est obtenue manuellement au moment de la pose de la nappe chauffante sur la surface à fondre en concentrant les mailles sur un secteur demandant une surconcentration d'énergie et en espaçant au maximum les mailles dans les autres zones.

En raison de la façon de tricotage, les mailles de la nappe chauffante 1 sont plus mobiles les unes par rapport aux autres dans un sens que dans l'autre. Sur les figures 1 à 3, les mailles M sont plus mobiles dans le sens vertical que dans le sens horizontal. Ainsi, lorsqu'il s'agit d'arranger un secteur demandant une surconcentration d'énergie, on comprime la nappe 1 dans le sens vertical et réduit par cela l le grand côté b1 (qui correspond au côté b de la figure 1) à un grand côté b2.

La Figure 4 représente, à titre d'exemple, un diagramme représentant, pour un cycle de soudage, l'effort mécanique imposé sur deux pièces à souder (courbe A) et la température mesurée à l'interface de l'assemblage (courbe B). Le cycle de soudage comprend une phase de chauffage d'une durée d'environ 20 secondes suivi d'un refroidissement relativement rapide pendant environ 10 secondes et d'un refroidissement plus lent pendant environ 80 secondes. Ce cycle de chauffage est décalé par rapport au cycle d'application de l'effort imposé sur l'assemblage. Comme la Figure 4 le montre, la période de chauffage commence uniquement environ 60 secondes après le début d'un cycle, ce début de cycle est marqué par une précharge de l'assemblage, par l'application de l'effort montant au maximum durant une période de 10 secondes environ suivie d'une certaine relâche pendant 50 secondes, période à laquelle la période de chauffage commence. Ce chauffage est accompagné d'une relâche supplémentaire puis d'un regain de l'effort appliqué sur l'assemblage jusqu'à la fin de la période de chauffage. Pendant le refroidissement des pièces soudées, l'effort imposé sur l'assemblage décroît rapidement pour être maintenu ensuite à un faible niveau (de l'ordre de 100 newtons).

**Revendications**

1. Dispositif pour le soudage de deux pièces en polymère par fusion au moyen d'une nappe chauffante (1) tricotée à partir d'un fil résistif revêtu d'un vernis isolant dont le point de fusion est choisi tel que le vernis fonde à une température prédéterminée entraînant un court-circuit avec arrêt du chauffage de la nappe chauffante, la nappe chauffante étant conformée pour être alimentée électriquement par un automate réglable en tension ou en intensité de courant et résistant au court-circuit, **caractérisé en ce que** la nappe est tricotée à partir d'un fil d'un diamètre allant de 0,2 mm à 0,28 mm et présente des mailles approximativement parallélépipédiques dont les dimensions vont de 1,5 x 3 mm$^2$ à 2,5 x 4,5 mm$^2$ et **en ce que** la nappe est souple et déformable pour pouvoir être mise en forme sous différentes géométries s'adaptant aux pièces à souder et **en ce que** la répartition des mailles est variable et la nappe est susceptible d'être constituée d'une ou de plusieurs couches.

2. Dispositif selon la revendication 1, **caractérisé en ce que** la nappe chauffante (1) est réalisée sous la forme d'un objet allongé.

3. Dispositif selon la revendication 2, **caractérisé en ce que** la nappe chauffante (1) est réalisée sous la forme d'une gaine.

4. Dispositif selon la revendication 2, **caractérisé en ce que** la nappe chauffante (1) est réalisée sous la forme d'une bande.

5. Dispositif selon l'une quelconque des revendications 1 à 4, **caractérisé en ce que** la nappe chauffante (1) présente un pas de maille irrégulier (b1, b2).

6. Procédé de soudage de deux pièces en polymères par fusion d'une interface de soudage des deux pièces, fusion obtenue moyennant une nappe chauffante (1) tricotée à partir d'un fil résistif revêtu d'un vernis isolant dont le point de fusion est choisi tel que le vernis fonde à une température prédéterminée entraînant un court-circuit avec arrêt du chauffage de la nappe chauffante, et susceptible d'être alimentée électriquement par un automate réglable en tension ou en intensité de courant et résistant aux courts-circuits, le procédé comprenant au moins les étapes suivantes :

   - de tricoter la nappe à partir d'un fil résistif ayant un diamètre allant de 0,2 mm à 0,28 mm, de façon à présenter des mailles approximativement parallélépipédiques dont les dimensions vont de 1,5 x 3 mm$^2$ à 2,5 x 4,5 mm$^2$, et être souple et adaptable à différentes géométries des pièces à souder,
   - donner à une nappe chauffante (1) une forme se rapprochant le plus possible de celle d'au moins une des faces à fusionner des pièces à souder et en tant que de besoins, un agencement des mailles en répartition et/ou en nombre de couches engendrant une surconcentration ponctuelle de l'énergie de soudage,
   - fixer la nappe chauffante (1) sur cette face à l'aide de plots réalisés en un matériau thermofusible,
   - assembler les deux pièces à souder,
   - effectuer le soudage.

7. Procédé selon la revendication 6, **caractérisé en ce que** la surconcentration ponctuelle de l'énergie de soudage est obtenue en repliant la nappe chauffante (1) sur elle-même autant que de besoin.

8. Procédé selon la revendication 6 ou 7, **caractérisé en ce que** la surconcentration ponctuelle de l'énergie de soudage est obtenue en donnant à la nappe chauffante (1) un pas de maille irrégulier (b1, b2).

**9.** Procédé selon l'une des revendications 6 à 8, **caractérisé en ce que** l'énergie délivrée à l'interface de soudage est comprise entre 10 et 100 J/mm2.

**Patentansprüche**

**1.** Vorrichtung zum Schweißen von zwei Teilen aus Polymer durch Verschmelzen mittels einer Heizmatte (1), gewirkt aus einem resistiven Draht, der mit einem isolierenden Lack bedeckt ist, dessen Schmelzpunkt derart gewählt ist, dass der Lack bei einer vorher festgelegten Temperatur schmilzt, was einen Kurzschluss mit Stopp der Heizung der Heizmatte bewirkt, wobei die Heizmatte ausgebildet ist, um von einer hinsichtlich Spannung und Stromstärke einstellbaren und kurzschlussresistenten Automatik elektrisch versorgt zu werden, **dadurch gekennzeichnet, dass** die Bahn aus einem Draht mit einem Durchmesser von 0,2 mm bis 0,28 mm gewirkt ist und zirka parallelepipedische Maschen aufweist, deren Abmessungen von 1,5 x 3 mm$^2$ bis 2,5 x 4,5 mm$^2$ reichen und dass die Matte elastisch und verformbar ist, um unter unterschiedlichen Geometrien formbar zu sein, die sich an die zu schweißenden Teile anpassen, und dadurch, dass die Verteilung der Maschen variabel ist und dass die Matte aus einer oder mehreren Schichten gebildet sein kann.

**2.** Vorrichtung nach Anspruch 1, **dadurch gekennzeichnet, dass** die Heizmatte (1) in Form eines länglichen Objekts realisiert ist.

**3.** Vorrichtung nach Anspruch 2, **dadurch gekennzeichnet, dass** die Heizmatte (1) in Form einer Hülle realisiert ist.

**4.** Vorrichtung nach Anspruch 2, **dadurch gekennzeichnet, dass** die Heizmatte (1) in Form eines Streifens realisiert ist.

**5.** Vorrichtung nach einem der Ansprüche 1 bis 4, **dadurch gekennzeichnet, dass** die Heizmatte (1) einen unregelmäßigen Maschenschritt (b1, b2) aufweist.

**6.** Schweißverfahren von zwei Teilen aus Polymeren durch Verschmelzen einer Schweißschnittstelle der zwei Teile, wobei das Verschmelzen mittels einer Heizmatte (1) erhalten wird, gewirkt aus einem resistiven Draht, der mit einem isolierenden Lack bedeckt ist, dessen Schmelzpunkt derart gewählt ist, dass der Lack bei einer vorher festgelegten Temperatur schmilzt, was einen Kurzschluss mit Stopp der Heizung der Heizmatte bewirkt, und elektrisch versorgbar von einer hinsichtlich Spannung und Stromstärke einstellbaren und kurzschlussresistenten Automatik, wobei das Verfahren die folgenden Schritte umfasst:

- Wirken der Matte aus einem resistiven Draht mit einem Durchmesser von 0,2 mm bis 0,28 mm derart, dass sie zirka parallelepipedische Maschen aufweist, deren Abmessungen von 1,5 x 3 mm$^2$ bis 2,5 x 4,5 mm$^2$ reichen und elastisch und an unterschiedliche Geometrien der zu schweißenden Teile anpassbar sind,
- Verleihen einer Heizmatte (1) eine Form, die sich so weit wie möglich derjenigen von mindestens einer der zu verschmelzenden Flächen der zu schweißenden Teile annähert, wobei im Bedarfsfall eine Anordnung der Maschen hinsichtlich Verteilung und/oder Anzahl von Schichten, eine punktuelle Überkonzentration der Schweißenergie erzeugt,
- Fixieren der Heizmatte (1) auf dieser Fläche mit Hilfe von Stiften, die aus einem thermisch schmelzbaren Material hergestellt sind,
- Verbinden der zwei zu schweißenden Teile,
- Durchführen des Schweißens.

**7.** Verfahren nach Anspruch 6, **dadurch gekennzeichnet, dass** die punktuelle Überkonzentration der Schweißenergie im Bedarfsfall durch Falten der Heizmatte (1) mit sich selbst erhalten wird.

**8.** Verfahren nach Anspruch 6 oder 7, **dadurch gekennzeichnet, dass** die punktuelle Überkonzentration der Schweißenergie erhalten wird, indem der Heizmatte (1) ein unregelmäßiger Maschenschritt (b1, b2) verliehen wird.

**9.** Verfahren nach einem der Ansprüche 6 bis 8, **dadurch gekennzeichnet, dass** die an der Schweißschnittstelle bereitgestellte Energie zwischen 10 und 100 J/mm$^2$ liegt.

**EP 1 857 257 B1**

**Claims**

1. A device for fusion welding two polymer parts using a heating mat (1) knitted from a resistive wire coated with an insulating varnish, the melting point of which is chosen such that the varnish melts at a predetermined temperature causing a short-circuit with stopping of the heating of the heating mat, the heating mat being configured to be supplied with electricity by a controller adjustable in voltage or current intensity and resistant to short-circuit, **characterized in that** the mat is knitted from a wire with a diameter ranging from 0.2 mm to 0.28 mm and has approximately parallelepiped cells whose dimensions range from 1.5 x 3 mm$^2$ to 2.5 x 4.5 mm$^2$ and **in that** the mat is flexible and deformable to be able to be shaped to different geometries adapting to the parts to be welded and **in that** the distribution of the cells is variable and the mat may be made up of one or several layers.

2. The device according to claim 1, **characterized in that** the heating mat (1) is made in the form of an elongate object.

3. The device according to claim 2, **characterized in that** the heating mat (1) is made in the form of a sheath.

4. The device according to claim 2, **characterized in that** the heating mat (1) is made in the form of a strip.

5. The device according to any one of claims 1 to 4, **characterized in that** the heating mat (1) has an irregular cell pitch (b1, b2).

6. A method for fusion welding two polymer parts of a welding interface of the two parts, the fusion being obtained using a heating mat (1) knitted from a resistive wire coated with an insulating varnish, the melting point of which is chosen such that the varnish melts at a predetermined temperature causing a short-circuit with stopping of the heating of the heating mat, and capable of being supplied with electricity by a controller adjustable in voltage or current intensity and resisting short-circuits, the method comprising at least the following steps:

   - knitting the mat from a resistive wire having a diameter ranging from 0.2 mm to 0.28 mm, so as to have approximately parallelepiped cells with dimensions ranging from 1.5 x 3 mm$^2$ to 2.5 x 4.5 mm$^2$, and to be flexible and adaptable to different geometries of the parts to be welded,
   - giving a heating mat (1) a shape approaching, as closely as possible, that of at least one of the faces to be fused of the parts to be welded and, as needed, an arrangement of the cells in terms of distribution and/or number of layers creating a periodic overconcentration of the welding energy,
   - attaching the heating mat (1) on said face using studs made from a thermofusible material,
   - assembling the two parts to be welded,
   - performing the welding.

7. The method according to claim 6, **characterized in that** the periodic overconcentration of the welding energy is obtained by folding the heating mat (1) on itself as needed.

8. The method according to claim 6 or 7, **characterized in that** the periodic overconcentration of welding energy is obtained by giving the heating mat (1) an irregular cell pitch (b1, b2).

9. The method according to one of claims 6 to 8, **characterized in that** the energy delivered at the welding interface is between 10 and 100 J/mm2.

Fig. 1

Fig. 2

_Fig.3_

_Fig.4_

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0430762 A